# EUROPEAN PATENT APPLICATION

(11) **EP 1 589 403 A2**
(43) Date of publication of application: **26.10.2005**
(21) Application number: 05007751.0
(22) Date of filing: 08.04.2005
(51) Int. Cl.: G06F 1/32

(54) **Systems and methods that provide enhanced state machine power management**

(30) Priority: 21.04.2004 US 828787
(71) Applicant: SYMBOL TECHNOLOGIES, INC., Holtsville, NY 11742 (US)
(72) Inventor: D'Agostino, Anthony, Smithtown NY 11787 (US); Bolen, Charles S., Kings Park NY 11754 (US); Schaefer, Donald, Wantagh NY 11793 (US)
(74) Representative: Grünecker, Kinkeldey, Stockmair & Schwanhäusser Anwaltssozietät

(57) **Abstract**

The present invention manages power for state machines. The system and methods selectively apply, remove and/or reduce power to portions of the state machine, based on power management schemes, intelligence, a user, an application, *etc*. Such novel systems and methods provide for sustaining a CPU and/or a network radio in an "on" state, while lowering and/or removing power to other portions of the state machine to reduce power consumption. The foregoing enables a wireless mobile terminal to maintain network connectivity and be able to wake to service events such as a link status change, a network keep alive, a proxy-ARP packets, a re-authentication packets, *etc*. Such power management can execute in the background and return the wireless mobile terminal to a "run" state *via* invocation from a wake source such as a power control, a key, a trigger, a touch screen, a wake up timer, a wake-on-LAN, *etc*.

## Description

### TECHNICAL FIELD

The present invention generally relates to state machine power management, and more particularly to systems and methods that selectively provide power to portions of a state machine through enhanced power management techniques.

### BACKGROUND OF THE INVENTION

A network typically comprises at least two microprocessor-based devices that are interconnected *via* hardware (*e.g.,* network cables, hubs, switchers...) and/or wireless technologies (*e.g.,* radio frequency (RF), infrared (IR)...) and employ software layers (*e.g.*, protocols, drivers...) in order to communicate with each other. In many instances, at least one of the microprocessor-based devices is a computer (*e.g.,* desktop, workstation, laptop, Personal Data Assistant (PDA), Handheld Mobile Terminal...). For example, a single computer can be networked with a peripheral device such as a printer, scanner and/or facsimile machine, for example, to enhance a user's experience by providing for generating hard copies of information, transforming hard copies to electronic data and/or exchanging information.

In another example, two or more computers, as well as peripheral devices, can be networked, wherein the networked computers, within the scope of any security policies, privileges, rights, *etc.,* can interact and exchange information amongst each other. In other instances, the microprocessor-based devices can machines, processes, plants, *etc.* For example, a robot on an assembly line can be networked to other processes on the assembly line (*e.g.,* a preceding and succeeding process), a central control center, a data repository, a data analyzer, a troubleshooting unit, *etc.* Moreover, this network can be coupled to one or more other networks.

In general, when one network component transmits a signal to another network component, the transmitting network component typically expects a response from the receiving network component within a reasonable time frame. If a response is not received within the reasonable time (*e.g.,* lapsed time-out), communication usually terminates. In order to respond to such transmissions in a timely manner, many devices continuously operate in a high power (*e.g.,* full power) mode such that a device can continuously, periodically and/or on demand, monitor, receive and respond to incoming transmissions.

Current industry trend, however, is to minimize power consumption. Common techniques that mitigate power consumption include automatic power management utilities that transition a device to a lower power or "off" state. For example, many devices utilize standard power management technologies, such as Advanced Configuration and Power Interface (ACPI), which enable system software/firmware (*e.g.*, operating system or application) to control power by automatically transitioning the device to a low power state (*e.g.,* Standby, Suspend, Hibernate, Sleep, Deep Sleep...) when full power is not required. Typically, when the device transitions to the lower power state, network connections are terminated and power is removed from the CPU, volatile memory, transceivers, *etc*. The foregoing can conserve power consumption and battery life, however, the device essentially is inoperable to communicate with the outside world until it transitions back to a higher power state.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The systems and methods of the present invention provide selective power management for state machines. Such power management can be configurable to remove (*e.g.,* some or all) power from inactive or unused portions of the state machine while maintain power to remaining (*e*.*g*., active, desired...) portions of the state machine. The foregoing can facilitate power consumption reduction and extend battery life, for example, in wireless mobile computing devices such as portable terminals, units or data readers, which typically utilize battery power as a power source when ambulatory. By way of example, power can be selectively applied to, *inter alia,* a CPU and/or a network radio of a portable terminal in order to continue to receive network data and/or ensure a reliable network connection and removed (*e.g.,* at least in part) from inactive components such as a display, backlight, scanner, peripheral ports, *etc.* in order to reduce power consumption, which can increase battery life. Power can be returned to portions upon any known means of providing a notification, for example, expiration of a time period, an event, an interrupt, a user, an application, a key/button/screen press, a network transmission, serial and/or USB transmission, intelligence, predefined criteria, *etc.*

The systems and methods utilize a power management component that can be employed in connection with essentially any state machine. This power management component can employ various power management configurations (*e.g.,* default, user defined, application created, intelligence-generated...) that define a power management approach for one or more disparate state machines. Conventional systems typically transition to a low power state (*e.g.,* Standby, Suspend, Hibernate, Sleep, Deep Sleep...) to conserve power, wherein power is removed from substantially all components, including the CPU and/or network support, such that the state machine is inoperable and network communication is unavailable or delayed (*e.g.,* requiring the state machine to be "woken" before data can be received). Thus, one aspect of the present invention provides for improvements over conventional systems by enabling desired functionality, such as network communication, to remain active while lowering or removing power from other portions to the state machine, which can result in extended battery life.

In one aspect of the present invention, the systems and methods described herein are employed to provide power management for a wireless mobile terminal. In general, wireless mobile terminals typically are configured such that they must maintain network connectivity and/or be able to wake to service events such as link status changes, a network keep alive, a proxy-ARP packet, and/or a re-authentication packet. Thus, a wireless mobile terminal commonly will be power management such that during a modified suspended state, the CPU and/or the network radio remain in a powered state. The foregoing can be accomplished through the novel power management systems and methods described herein, for example, *via* employing the present invention utilizing a background power management technique. Such technique can be manually and/or automatically activated when the terminal transitions to a suspended state. In such state, the CPU and/or network radio can remain powered on, while the display and/or other peripheral devices can be powered down to conserve battery life. The wireless mobile terminal can return to a higher power, or "run" state from the background state *via* conventional wake sources including a power control, a key, a trigger, a touch screen, a wake up timer, a wake-on-LAN, *etc*.

In another aspect of the present invention, a system comprising a power management component is illustrated. The system can be employed in connection with essentially any state-machine (*e.g*., a portable terminal, *etc*.) in order to reduce power consumption and extend battery life, if applicable, while maintaining a desired level of functionality. The power management component can be activated through various means. For example, the following action can be utilized to invoke the power management component: expiration of time, inactivity, an interrupt, an event, a user request, a programmatic application program interface (API), an application, the state machine, and/or another state machine, for example. In addition or alternatively, the power management component can intermittently or continuously poll the state machine (*e.g.,* for frequency of use and activity) to determine whether to apply power management. It is to be appreciated that the power management component can be executed in BIOS or by an application, an external device, an operating system (OS), *etc.*

Such activation can result in selective power removal and/or an analysis of the state machine to determine where to reduce power (*e.g.,* from a present level to none). Upon determining or being notified where to remove power, the power management component can inform the user and wait for a confirmation and/or automatically remove power. Such removal can be performed to maintain operable power to some components of the state machine (*e.g*., CPU, network connections, network radio...) while reducing power to other state machine components (*e.g*., display, backlight, scanner, peripheral ports...). The foregoing provides a user with desired functionality, such as receiving network data, while reducing power consumption and/or improving battery life.

The power management component can additionally be invoked to supply power to a component(s) of a state machine (*e*.*g*., after power has been reduced and/or removed from a state machine component). Such activation can be initiated *via* depression and/or turning of a key, a touch on a touch screen, programmatic control *via* API, voice activation, an expired timeout, a date, electrical current, a request, a signal (*e.g., via* a direct and wireless connection), motion detection, a network packet (*e.g., via* a "keep alive" signal and wake-on-LAN request), historical information, machine learning, classifiers, inferences, probabilities, *etc*.

In another aspect of the present invention, the power management component can utilize power management schemes (*e.g.,* configurations) stored in a configuration bank. The power management configurations can be obtained when applying and/or changing power management. The configuration bank can reside locally and/or remotely in connection with the power management component, and configurations stored therein can be generated upon request, uploaded *via* a user, an API, and/or an application. Such configuration can be default, user defined, application generated and/or intelligently created and dynamically modified and serially and/or concurrently employed in connection with one or more state machines.

In yet another aspects of the invention, a plurality of configuration stores and a configuration API can be utilized to store power management configurations. Such stores include a default, user defined, application generated and/or intelligence-based configuration store. The user defined configuration stores can be utilized to save configurations generated by users. Such configurations can be terminal, application and/or user specific, and provide for multiple configurations for a similar terminal. The default stored can provide generic configurations based on testing, design specifications, customer surveys, and/or other heuristics. The application generated configuration store can store configurations that are generated by applications and turned to particular software. The intelligence-based configuration store can store configurations automatically generated in connection with machine learning, statistics, probabilities, inferences and/or classifiers. The configuration API can be utilized by the user to dynamically define and/or change the power management in real-time.

In other aspects of the invention, the power management system can manage power *via* direct coupling, an intermediate network/bus and/or wirelessly. As noted above, control of power can be based on configurations stored within store and/or through an API. Such power management can be applied to stand-alone systems and/or for a plurality of systems residing on similar and/or disparate networks. In addition, power can be facilitated through one system to another.

In still other aspects of the present invention, a state diagram, a flow diagram, methodologies and various environments associated with selective management of state machine power are depicted. The state and flow diagrams illustrates transitions from higher power to lower power and/or off states, and various combinations thereof. The methodologies also illustrate transitions to and from higher power and lower power modes, including self-monitoring and external invocation. The environments include an exemplary data reader, network and operating system that can be employed in accordance with aspects of the present invention.

To the accomplishment of the foregoing and related ends, the invention comprises the features hereinafter fully described and particularly pointed out in the claims. The following description and the annexed drawings set forth in detail certain illustrative aspects and implementations of the invention. These are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF THE DRAWINGS

FIG. 1 illustrates an exemplary system that manages power provided to various portions of a state machine.
FIG. 2 illustrates an exemplary system that facilitates state machine power management *via* configurations stored in a configuration bank.
FIG. 3 illustrates an exemplary power management system that utilizes power management schemes from a plurality of configuration stores to manage power for a portable terminal.
FIG. 4 illustrates an exemplary system that provides power management to state machines *via* direct coupling and/or an intermediate network and/or buss.
FIG. 5 illustrates an exemplary system that provides power management to state machines *via* wireless networks and/or busses.
FIG. 6 illustrates an exemplary state diagram for a system that provide selective power management for state machines.
FIG. 7 illustrates an exemplary flow diagram for a system that provide selective power management for state machines.
FIG. 8 illustrates an exemplary methodology for selectively reducing state machine power in response to a request.
FIG. 9 illustrates an exemplary methodology for determining when to reduce portions of state machine power.
FIG. 10 illustrates an exemplary methodology for selectively returning or increasing state machine power in response to a request.
FIG. 11 illustrates an exemplary methodology for determining when to return or increaser state machine power.
FIG. 12 illustrates an exemplary portable terminal that can be employed in connection with the present invention.
FIG. 13 illustrates an exemplary networking environment that can be employed in connection with the present invention.
FIG. 14 illustrates an exemplary operating environment that can be employed in connection with the present invention.

### DETAILED DESCRIPTION OF THE INVENTION

The present invention provides systems and methods that facilitate state machine power management. The system and methods include a power management component that can be utilized to selectively determine which portions of the state machine receive power and/or apply power to such portions. Such power discrimination can be provided as a default, user defined and/or intelligence generated power management configuration and utilized with essentially any state machine. The systems and methods can be utilized in connection with hardwired and/or battery powered wireless mobile computing devices such as, for example, a portable terminal or scanner/reader, in order to reduce power consumption and/or increase battery life. The novel power management schemes of the present invention provide for power to be applied to sustain desired functionality such as, for example, network connections and network radio, while lower and/or remove power to inactive components. The foregoing is an improvement over conventional systems that either remain in a higher power mode or transition to a low power mode where essentially all network functionality is suspended in order to conserve power.

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

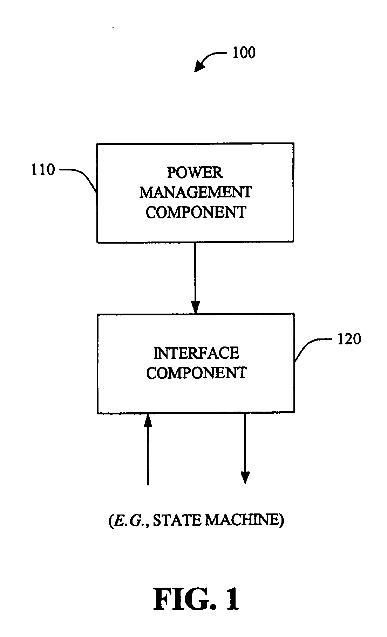

FIG. 1 illustrates a system 100 that facilitates state machine power management. The system 100 comprises a power management component 110 and an interface component 120. The system 100 can be employed in connection with essentially any state-machine (*e.g.,* a portable terminal, a data reading unit, a laptop computer, a VCR, a stereo, a phone, an alarm system, *etc*.) in order to reduce power consumption and extend battery life, if applicable, while sustaining a desired level of functionality.

By way of example, the system 100 can be executed *via* BIOS, an application, an external device, an operating system (OS), *etc.* associated with a state machine in order to selectively remove power (*e.g*., from a present level to no power) to at least portions of the state machine when respective portions do not require power (*e.g*., due to inactivity, user desire...). The reduction of power typically coincides with a transition from a higher power consuming state to a lower power consuming state. For such transitions, conventional systems commonly remove power from essentially all components (*e.g.,* CPU, network interfaces...) such that power is minimized and the state machine is substantially inoperable until returning to the higher power consuming state. The novel approach of the present invention utilizes selective power management such that the power management component 110 can maintain operable power to a state machine's CPU, network connections, and network radio, for example, while removing and/or reducing power to other components (*e.g*., display, backlight, scanner, peripheral ports...). The foregoing provides a user with desired functionality, such as receiving network data, while reducing power consumption and/or improving battery life.

In order to determine whether to affect state machine power, the power management component 110 can intermittently or continuously poll the state machine. For example, the power management component 110 can poll various components associated with the state machine to determine a frequency of use for respective components and/or activity level (*e.g*., from active to inactive). This information can be saved and/or parsed to group components from those that require power to those that currently require little to no power. As the state machine components of the state machine are polled, this information can be updated such that state machine components can transition to a low or no power when activity ceases and power can be provided and/or returned when state machine components required more power.

In another aspects of the invention, the power management component 110 can be activated upon a time lapse associated with a period of inactivity, an interrupt, an event, a user request, a programmatic application program interface (API), an application, the state machine, and/or another state machine, for example. Such activation can result in selective power removal and/or an analysis of the state machine to determine where to lower power. Upon determining or being notified where to reduce power, the power management component 110 can inform the user and wait for a confirmation and/or automatically lower power. In addition, the confirmation can include modification to the power management scheme.

The particular power management technique utilized by the power management component 110 can based on criteria such as, for example, a characteristic of the state machine, a state of one or more components of the state machine, a user identified configuration, a user attribute, *etc*. In addition, the technique can be updated, overridden and/or modified if any of the aforementioned criteria changes. Moreover, power management can be halted, paused, and/or resumed when a higher priority task needs to be handled by the state machine and/or the power management component 110.

The power management component 110 can additionally be invoked to supply power to a component(s) of a state machine (*e.g.,* after power has been reduced and/or removed from a component). Such activation can be initiated *via* depression and/or turning of a key, a touch on a touch screen, programmatic control *via* API, voice activation, an expired timeout, a date, electrical current, a request, a signal (*e.g., via* a direct and wireless connection), motion detection, a network packet (*e.g., via* a "keep alive" signal and wake-on-LAN request), *etc.* In addition, the power management component 110 can utilize historical information to infer (*e.g.,* in connection with classifiers, probabilities, statistics, and rules) when power should be applied to a component(s) of a state machine without notification. For example, a history log may show that at a particular time each day, particular components of a state machine are utilized. The power management component 110 can utilize such information to ensure power is provided to these state machine components in order to mitigate any need for a "wake-up" notification.

The interface component 120 can provide a communication channel between the power management component 110 and a state machine. It is to be appreciated that this channel can be uni or bi-directional, half or full duplex, and/or multiplexed. In addition, the channel can be electrical, mechanical, and/or optical based. Moreover, various known communication standards, protocols and/or drivers can be utilized in accordance with aspects of the present invention.

In one particular example, the present invention can be employed in connection with (*e.g.,* as an executing background utility) a wireless mobile terminal to provide power management therein. Typically, wireless mobile terminals must maintain network connectivity and/or be able to wake to service events such as a link status change, a network keep alive, a proxy-ARP packet, and/or a re-authentication packet. The present invention provides a novel technique wherein the CPU and/or the network radio are maintained in an "on" state and remaining portions of the wireless mobile terminal are transitioned to a lower power, or suspend state to conserve power. For example, a display and/or other peripheral devices can be powered down to conserve battery life. Portions in such lower power state can transition back to an "on" state upon a wake event (*e.g.,* a link status change, a network keep alive, a proxy-ARP packet, and/or a re-authentication packet) from essentially any known wake source (*e.g.,* a power control, a key, a trigger, a touch screen, a wake up timer, a wake-on-LAN...). It is to be appreciated that such novel features can be manually and/or automatically activated for a wireless mobile terminal.

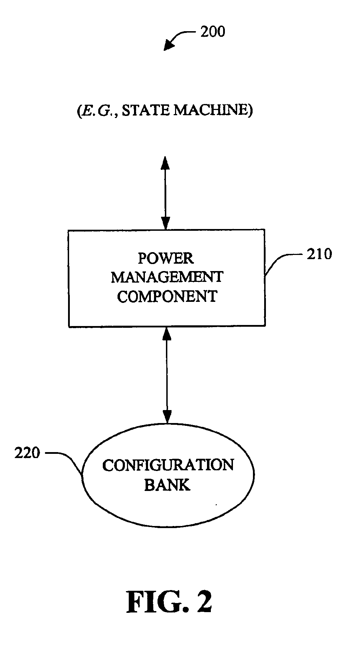

FIG. 2 illustrates a system 200 that facilitates state machine power management. The system 200 comprises a power management component 210 and a configuration bank 220. The power management component 210 can be substantially similar to the power management component 110. For example, the power management component 210 can be utilized to selectively remove and/or reduce power to portions of a state machine. As noted above, the removal and/or reduction of power transitions at least portions of a state machine from a higher power consuming state to a lower power consuming state. Unlike conventional systems, the present invention utilizes a technique, wherein power can be selectively provided to portions of the state machine, such as a CPU and network interface, and lowered to other portions of the state machine, which can ensure reliable network communication, reduce power consumption and extend battery life.

The configuration bank 220 can be utilized to store one or more power management schemes that define the selectivity employed by the power management component 210. It is to be understood that the configuration bank 220 can reside locally and/or remotely in connection with the power management component 210, and configuration stored therein can be generated upon request, uploaded *via* a user, an API, and/or an application. Such configuration can be default, user defined, application generated and/or intelligently created and dynamically modified. In addition, more than one configuration (*e.g*., serially and concurrently) can be employed by the power management component 210 in connection with a single state machine and/or across state machines.

By way of example, when the power management component 210 is notified and/or determines to apply or change power management, the power management component 210 can obtain a suitable power management scheme (hereafter "configuration") from the configuration bank 220. For example, when invoked the power management component 210 can search the configuration bank 220 and retrieve a suitable configuration. In another example, the power management component 210 can check the state of the state machine and/or components thereof. This information can be utilized to determine which components of the state machine require power and which components require less or no power.

The configuration obtained from the configuration bank 220 can be predetermined and/or selected based on the state machine, inactive state machine components, active state machine components, a user identified configuration, the user, *etc.* In addition, the configuration be changed and/or modified. In one instance, a configuration can be selected that enables power to a CPU and/or networking hardware such that any network connection can be sustained while other components transition to a lower power state. With this configuration, data conveyed over a network to the state machine can be received, for example, by utilizing a network "keep alive" signal and/or wake-on-LAN request.

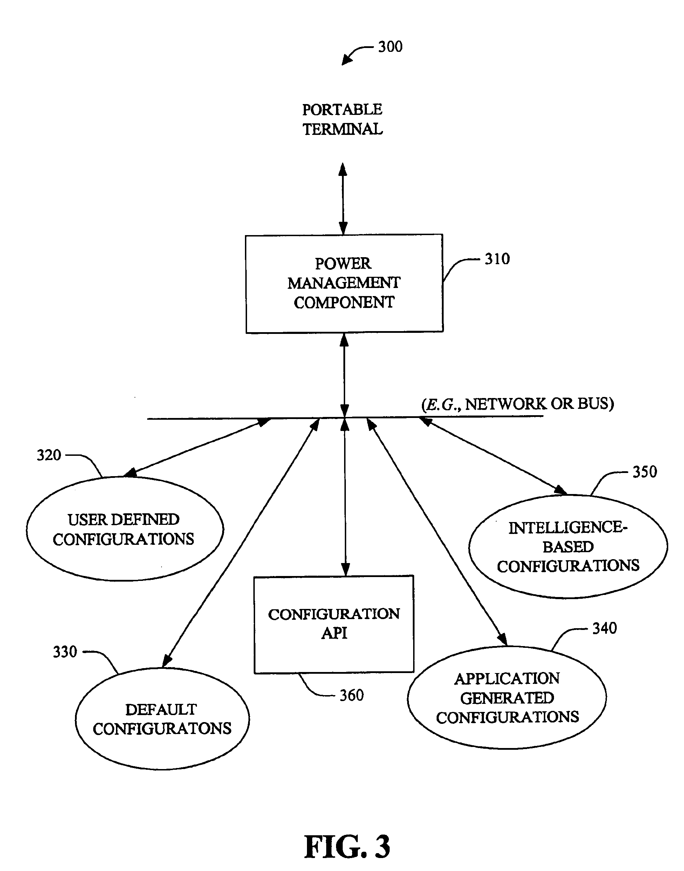

FIG. 3 illustrates a power management system 300 that employs selective power management for a portable terminal (*e.g*., a wireless mobile computing device, unit, data reader...). The system 300 comprises a power management component 310, a plurality of configuration stores 320, 330, 340 and 350, and a configuration API 360.

The configuration store 320 can be utilized to save user defined configurations. For example, a user may desire to employ a particular configuration that is tailored to the portable terminal, circumstances, *etc*. In one instance, the user may desire to define what portions of the terminal can transition to a lower power or no power state. For example, the user may know that particular functionality will be utilized in the near future and desire that that functionality remain powered. Similarly, the user may know that particular functionality will not be utilized and thus proactively transition associated components to a lower power or no power state. Moreover, more than one configuration can be employed with the terminal, and different users may desire different power management and/or one user may be associated with multiple configurations. Thus, there can be a plurality of configurations for one or more disparate portable terminals stored in the user defined configuration store 320.

The configuration store 330 can be utilized to stored default configurations. For example, a manufacturer or vendor of a portable terminal can provide standard configurations based on testing, design specifications, customer surveys, and/or other heuristics. In another example, a system administrator can generate default configurations. Such configurations can provide novice users with power management capabilities without having to learn how to generate and store configurations. The configuration store 340 can store configurations that are generated by applications. Thus, the power management component 310 can be turned to particular software.

The intelligence-based configuration store 350 can store configurations automatically generated in connection with machine learning, statistics, probabilities, inferences and/or classifiers (*e.g.,* explicitly and implicitly trained), including Bayesian learning, Bayesian classifiers and other statistical classifiers, such as decision tree learning methods, support vector machines, linear and non-linear regression and/or neural networks. For example, training sets that describe a typical sequence of events, *a priori* information and/or historical data can be utilized to generate configurations. In addition, feedback can be utilized to update and/or refine configurations. It is to be appreciated that such intelligence can be employed in connection with generating default, user defined and/or application configurations. The configuration API 360 can be utilized by the user to define and/or change the power management in real-time. Thus, the user can decide at any time a desired power management scheme and effect current power management through the configuration API 360.

The power management component 310 can employ such configurations as described in detail herein to manage the power applied to the various components of the portable terminal. Thus, power can be selectively applied to the various portions of the portable terminal in order to maintain a desired level of functionality while reducing power consumption. As depicted, the power management component interacts with the configuration stores 320-350 and the configuration API 360 over a common network and/or bus. However, it is to be appreciated that the invention is not so limited. For example, respective configuration stores 320-350 and/or the configuration API 360 can reside on disparate networks and/or buses (*e.g.,* wireless and hardwired).

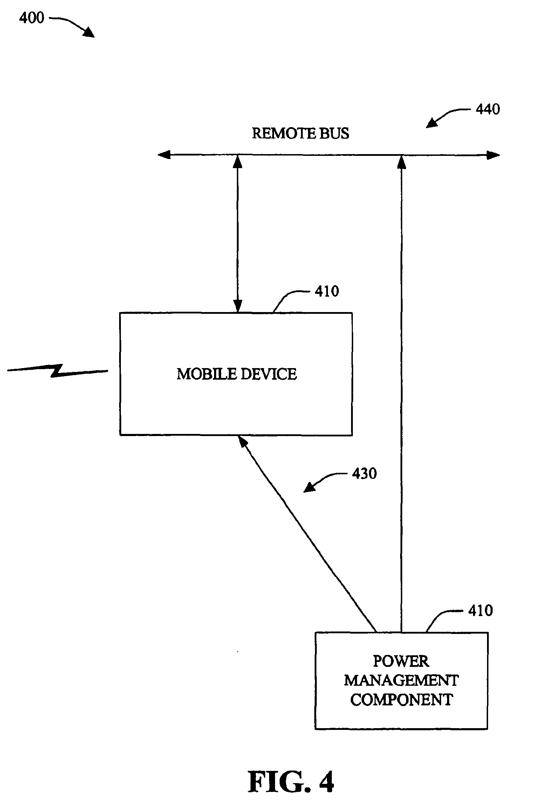

FIG. 4 illustrates a power management system 400. The power management system 400 comprises a power management component 410 that manages power for a mobile device 420. The power management component 410 can communicate with the mobile device 420 through a direct connection (*e.g.,* wire and wireless) 430 and/or through an intermediate network 440. Thus, upon being invoked the power management component 410 can transmit analysis and/or control signals to the mobile device 420 to determine state and/or control power to the mobile device 410 and/or components therein. Control of power can be based on configurations stored within the power management component 410, the mobile device 420 and/or remotely, for example, through the intermediate network 440. As described previously, such configurations can be default, user defined, application generated and/or intelligently created, and stored within configuration stores, for example.

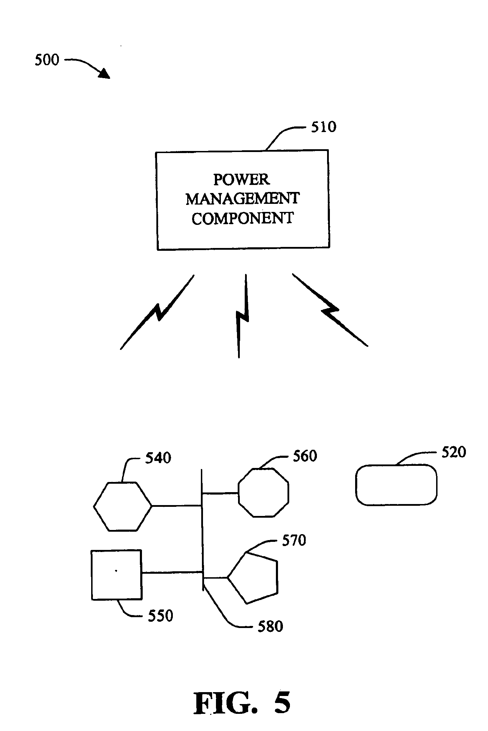

FIG. 5 illustrates a wireless power management system 500. The power management system 500 comprises a power management component 510 that communicates wirelessly with state machines to manage state machine power. In once instance, the state machine can be a stand-alone device 520, wherein the power management component 510 manages power exclusively for the device 520. It is to be appreciated that such power management can be internal and/or external from the device 520. In another instance, the power management component 510 can serially and/or concurrently manage power for a plurality of devices 540, 550, 560 and 560. Such devices 540-560 can reside on a similar network 570 and/or disparate networks (not shown). In addition, power for one of the devices can be facilitated through a different device. For example, power management for the device 540 can conveyed through device 550 and/or device 550 can toggle the power for portions of device 540 based on communication from the power management component 510. In another instance, the power management component 510 can manage the power associated with networked devices 540-560, stand-alone device 520 and other devices (not shown).

The network 570 can be essentially any network that can be utilized to connect state machines. Such network can include one or more disparate protocols. For example, the network can be a local-area network (LAN), a wide-area network (WAN), a campus-area network (CAN), a metropolitan-area network MAN), and/or a home-area network (HAN). In addition, the network can be based on a bus, star, and/or ring topology and/or peer-to-peer and/or client/server architecture. Moreover, any suitable networking protocol such as Ethernet (*e.g.,* 10Base-T, 100Base-T (Fast Ethernet) and 1000Base-T (Gigabit Ethernet)) and token-ring network, for example, can be utilized.

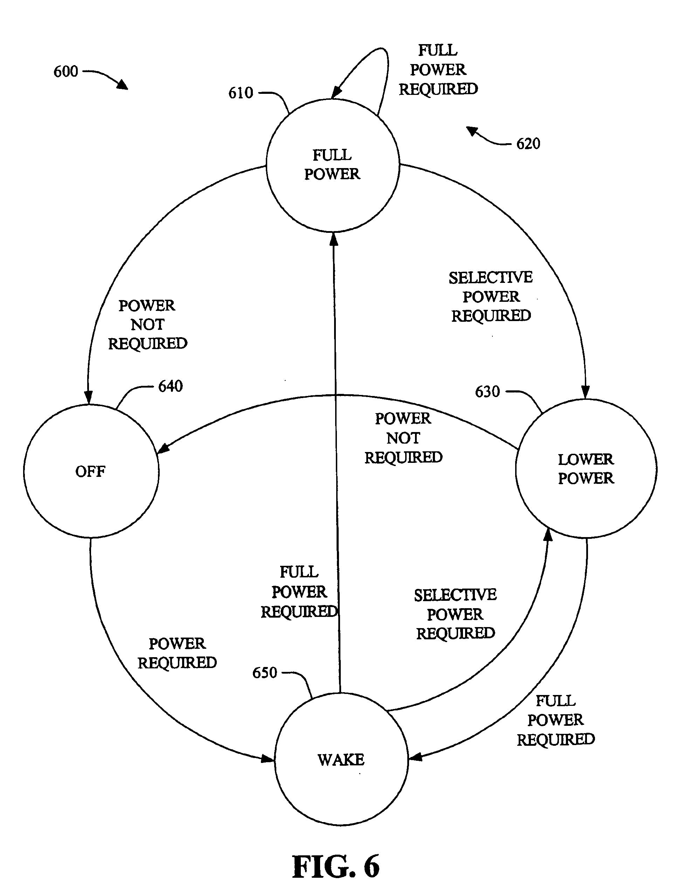

FIGs. 6-9 illustrate a state diagram, a flow diagram, and methodologies, in accordance with an aspect of the present invention. For simplicity of explanation, the diagrams are depicted and described as a series of acts. It is to be understood and appreciated that the present invention is not limited by the acts illustrated and/or by the order of acts, for example acts can occur in various orders and/or concurrently, and with other acts not presented and described herein. Furthermore, not all illustrated acts may be required to implement the methodologies in accordance with the present invention. In addition, those skilled in the art will understand and appreciate that the diagrams could alternatively be represented as a series of interrelated events.

FIG. 6 illustrates an exemplary state machine power management state diagram 600. At reference numeral 610, a state machine employing a power management system is operating at substantially full power. As long as the state machine requires such power, the state machine remains in this state, as indicated at reference numeral 620. When the state machine requires less power (*e.g*., powered down or not fully utilized), a power management system can be invoked to manage the state machine's power. As noted above, the power management system can be activated by the state machine, a user, an application, *etc*. For example, the power management component can be invoked upon key depression, turning of a key, an applicable touch on a touch screen, programmatic control *via* an API, voice, time, date, electrical current, a request, a signal (*e.g., via* a direct and wireless connection), motion, a network packet (*e.g., via* a "keep alive" signal and wake-on-LAN request), inferences, machine learning, probabilities, statistics and/or rules. Alternatively, the power management system can continuously or periodically execute and poll the state machine.

Upon being notified (*e.g., via* the state machine, an application, a user, self-determination...) that power should be reduced, the state machine can transition to a lower power state 630. Any known mechanism for determining which portions of the state machine should receive less or no power can be utilized. In one instance, a configuration can be utilized to define the power management scheme. For example, power can be removed from essentially all portions except for the CPU and/or network radio (*e.g.,* in connection with a portable terminal) in order to continue to receive data over a network(s). Alternatively, if a notification to remove power from the state machine is received, the power management system can transition the state machine to an "off" state 640. When the state machine is in state 640, the power management system can remain active in order to power the state machine back up, when desired, or the power management system can be powered down and employed when needed.

When in the lower power state at 630, the power provided to the various portions of the state machine can be dynamically and/or automatically modified. Thus, power can be removed and/or provided to render inactive portions active and/or active portions inactive. In addition, the state machine can transition back to the full power state 610 or the off state 640. For example, upon receiving a notification that power is required, the state machine can transition to a wake state 650 and then to the full power state 610, and upon receiving a notification power the state machine down, the state machine can transition to the off state 640. From the off state 640, the state machine can transition back to the full power state or a low power state. In either scenario, the state machine can first transition to the wake state 650. From there, the state machine can transition to the lower power state 630 when only partial power is desired (*e.g.,* to power the CPU and network radio) or to the full power state 610 when full power is desired.

The foregoing power transitions can be achieved *via* a power management component, as described herein. Thus, when a power transition is desired (*e.g., via* a request or self-determination), the power management component can be invoked to suitably manage state machine power. As described previously, power management schemes, intelligence, and/or control *via* an API can be utilized to facilitate power management.

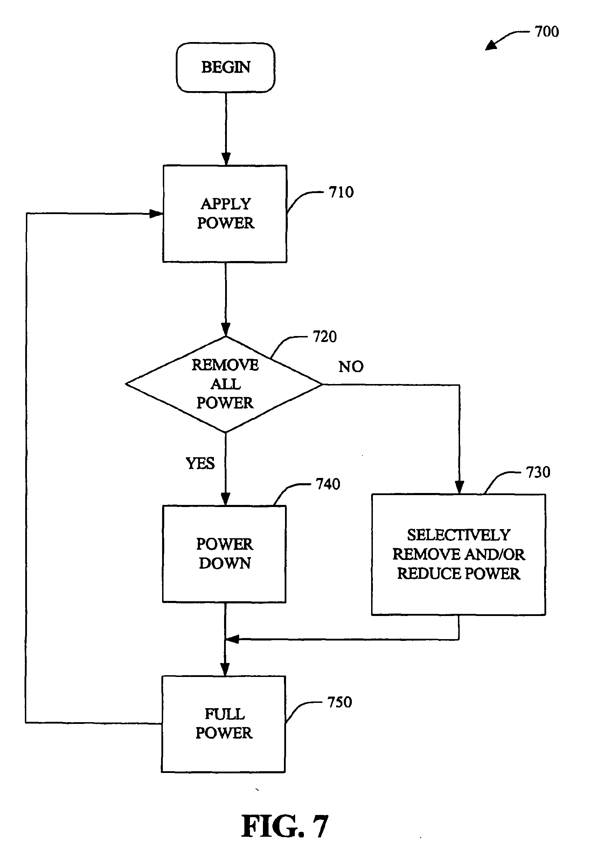

FIG. 7 illustrates an exemplary state machine power management flow diagram 700. At reference numeral 710, power is applied to a state machine. At reference numeral 720, a power management system, as described herein, is invoked to manage power provided to the state machine. If, at 720, power is to be reduced and/or removed from portions of the state machine, then at 730 the power management component can employ a suitable configuration to facilitate determining the portions that require no power and/or less power, and subsequently remove and/or reduce power to such portions. If, at 720, power is to be removed from the state machine, then at 740 the power management component can remove power. At reference numeral 750, the power management component can transition the state machine from either a no power mode or a lower power mode to full power.

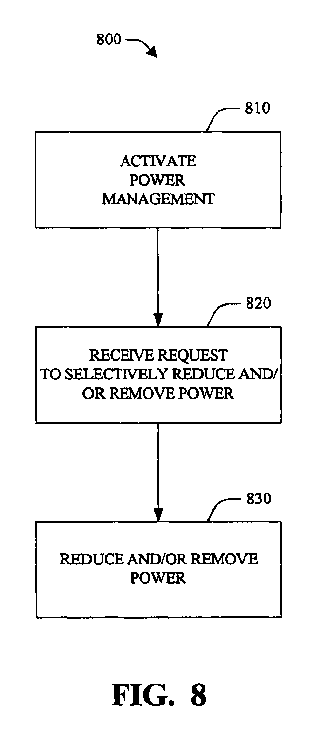

FIG. 8 illustrates an exemplary methodology 800 that manages state machine power. At reference numeral 810, a power management system is activated for the state machine. For example, the power management component can be activated upon a lapse of time, a period of inactivity, an interrupt, an event, a user request, a programmatic application program interface (API), inferences, probabilities, statistics, machine learning, an application, the state machine, and/or another state machine, for example.

At reference numeral 820, the power management component receives a request to lower and/or remove power to portions of the state machine. As noted previously, configurations can be utilized to facilitate such power control and/or a direct signal indicating how to manage power can be received. Such configuration can be obtained from a plurality of stores and/or provided *via* a configuration API. In general, a user-defined store can be utilized to save customized configurations generated by one or more users. Such configurations can be customized for mobile terminals, applications and/or users, and provide for multiple configurations. The default store can store general configurations based on testing, design specifications, customer surveys, and/or other heuristics, for example. The application-generated store can store configurations that are generated by applications and turned to particular software. The intelligence-based configuration store can store configurations automatically generated in connection with machine learning, statistics, probabilities, inferences and/or classifiers. The configuration API can be utilized by the user to dynamically define and/or change the power management in real-time.

At reference numeral 830, the power management component can reduce and/or remove power to portions of the state machine, for example, based on one or more configurations. The power management component can remain active and respond to further power management related signals or shut down until a next power management notification arrives. In addition, the power management component can inform the user and wait for a confirmation prior to applying a power management scheme and/or automatically remove and/or reduce power without user confirmation.

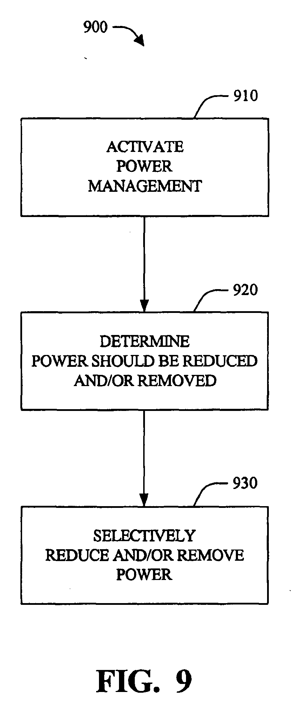

FIG. 9 illustrates an exemplary methodology 900 that manages state machine power. At reference numeral 910, a power management system is activated for the state machine, as described in detail above. At reference numeral 920, the power management component determines that power should be lowered and/or removed from portions of the state machine. For example, the power management component can execute and intermittently or continuously poll the state machine to determine whether to apply a power management scheme. In addition, the power management component can be invoked as described above and then analyze the state machine to determine whether power management should be employed. At reference numeral 930, the power management component can reduce and/or remove power to portions of the state machine, for example, based on a suitable configuration.

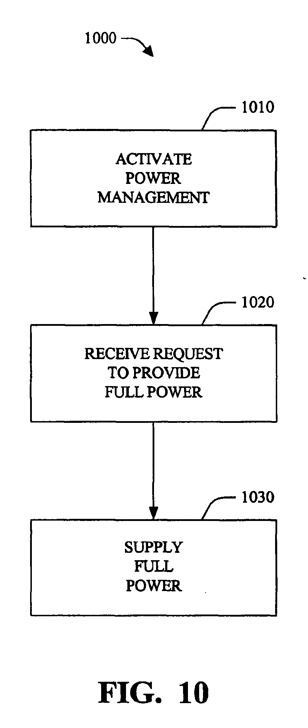

FIG 10 illustrates an exemplary methodology 1000 that returns a state machine to a higher power state from a lower power or no power state. At reference numeral 1010, a power management system is activated for the state machine. Similar to activation to reduce and/or remove power, the power management component can be activated upon a lapse of time, a period of inactivity, an interrupt, an event, a user request, a programmatic application program interface (API), an application, the state machine, inferences, probabilities, statistics, machine learning, and/or another state machine, for example. At reference numeral 1020, the power management component receives a request to return power to portions of the state machine. At reference numeral 830, the power management component returns such portions to full power.

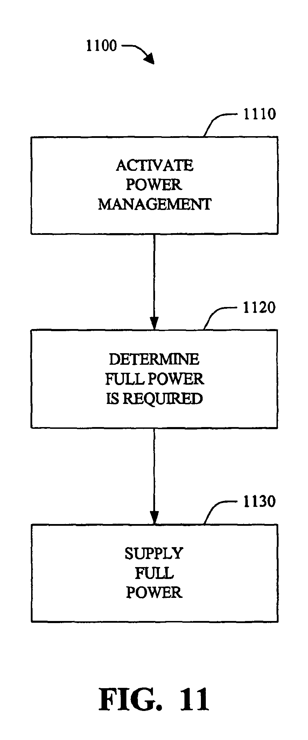

FIG. 11 illustrates an exemplary methodology 1100 that returns a state machine to a higher power state from a lower power or no power state. At reference numeral 1110, a power management system is activated for the state machine, as described in detail above. At reference numeral 1120, the power management component determines (*e.g., via* monitoring) that power should be applied to portions of the state machine. For example, the power management component can intermittently or continuously poll the state machine to determine whether to apply power. In addition, the power management component can be invoked as described above and then analyze the state machine to determine whether power should be applied to a portion of the state machine. At reference numeral 1130, the power management component returns the state machine to full power from a reduced and/or no power state.

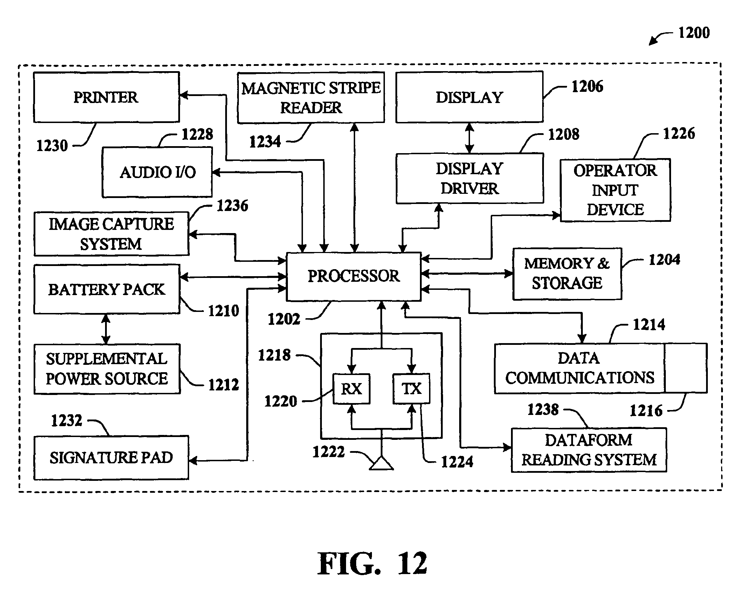

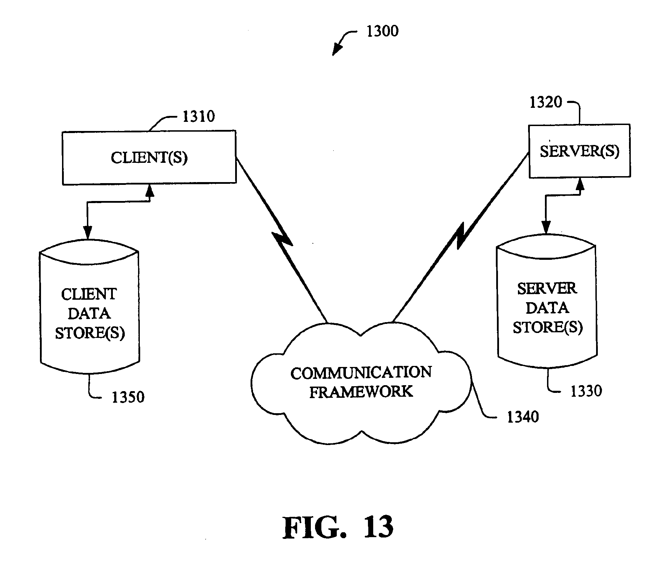

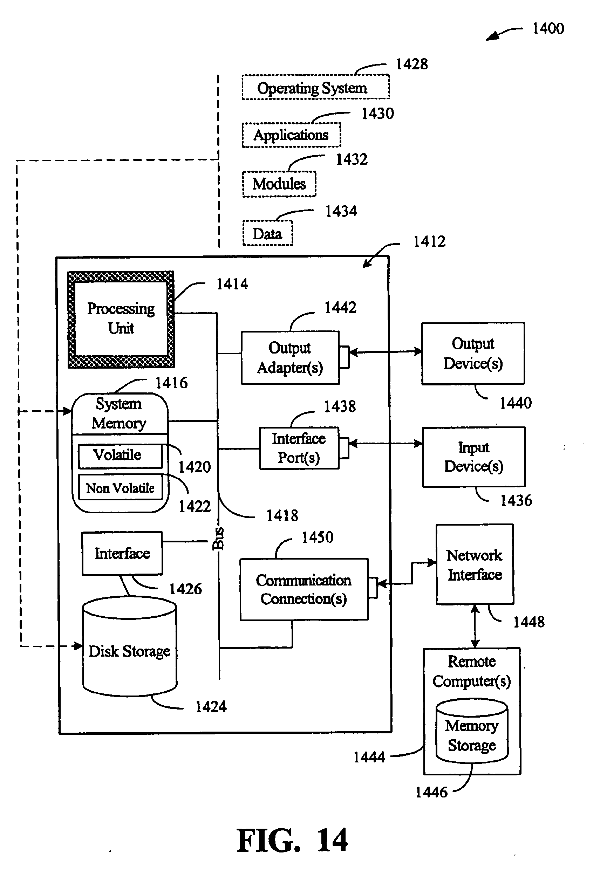

In order to provide a context for the various aspects of the invention, FIGs 12-14 as well as the following discussion are intended to provide a brief, general description of a suitable computing environment in which the various aspects of the present invention can be implemented. While the invention has been described above in the general context of computer-executable instructions of a computer program that runs on a computer and/or computers, those skilled in the art will recognize that the invention also can be implemented in combination with other program modules. Generally, program modules include routines, programs, components, data structures, *etc*. that perform particular tasks and/or implement particular abstract data types.

Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, and the like. The illustrated aspects of the invention may also be practiced in distributed computing environments where task are performed by remote processing devices that are linked through a communications network. However, some, if not all aspects of the invention can be practiced on stand-alone computers. In a distributed computing environment, program modules may be located in both local and remote memory storage devices.

FIG. 12 illustrates a schematic block diagram of an exemplary portable machine data reading device 1200. Such device can include a processor 1202 that is responsible for controlling the general operation of the device 1200. The processor 1202 can be programmed to control and operate the various components within the device 1200 in order to carry out the one or more functions described herein. The processor 1202 can be any of a plurality of suitable processors, and the manner in which the processor 1202 can be programmed to carry out the functions relating to the present invention will be readily apparent to those having ordinary skill in the art based on the description provided herein.

A memory 1204 connected to the processor 1202 serves to store program code executed by the processor 1202, and also serves as a storage means for storing information such as receipt transaction information and the like. The memory 1204 may be a non-volatile memory suitably adapted to store at least a complete set of the information that is displayed. Thus, the memory 1204 may include a RAM memory for high-speed access by the processor 1202 and/or a mass storage memory, *e.g*., a micro drive capable of storing gigabytes of data that comprises text, images, audio, and video content. According to one aspect, the memory 1204 has sufficient storage capacity to store multiple sets of information, and the processor 1202 could include a program for alternating or cycling between various sets of display information.

A display 1206 can be coupled to the processor 1202 *via* a display driver system 1208. The display 1206 can be a color liquid crystal display (LCD), flat panel, flat screen, touch screen or the like. The display 1206 functions to present data, graphics, or other information content. For example, the display 1206 may display a set of customer information, which is displayed to the operator and may be transmitted over a system backbone (not shown). Additionally, the display 1206 may display a variety of functions that control the execution of the device 1200. The display 1206 is capable of displaying both alphanumeric and graphical data.

Power can be provided to the processor 1202 and other components forming the device 1200 by an onboard battery system 1210 and/or external power source. In the event that the battery system 1210 fails or becomes disconnected from the device 1200, a backup or supplemental power source 1212 can be employed to provide power to the processor 1202 and to charge the battery system 1210. The processor 1202 of the mobile device 1200 can induce a power management component, as described in detail above, to reduce power while maintain a desired level of functionality.

The mobile terminal 1200 includes a communication subsystem 1214 that includes a data communication port 1216, which can be employed to interface the processor 1202 with a remote computer. The port 1216 includes at least the USB and IEEE 1394 serial communications capabilities described hereinabove. Other technologies may also be included, for example, infrared communication utilizing an IrDA port.

The portable device 1200 further includes a transceiver section 1218 in operative communication with the processor 1202. The section 1218 can include an RF (and/or optical and IR) receiver 1220, which receives RF signals from a remote device *via* an antenna 1222 and demodulates the signal to obtain digital information modulated therein. The section 1218 further includes a transmitter 1224 for transmitting information to a remote device, for example, in response to manual user input *via* a user input device 1226 (*e.g*., a keypad) or automatically in response to the completion of a transaction or other predetermined and programmed criteria. The transceiver section 1218 facilitates communication with a transponder system, either passive or active, that is in use with product or item tags.

The processor 1202 can signal (or pulse) the remote transponder system *via* the transceiver 1218 and detect any returned signal in order to read the contents of the tag memory. The section 1218 further facilitates telephone communications using the device 1200. In furtherance thereof, an audio I/O section 1228 is provided as controlled by the processor 1202 to process voice input from a microphone (or similar audio input device) and audio output signals (from a speaker or similar audio output device). In further support thereof, the device 1200 may provide voice recognition capabilities such that when the device 1200 is used simply as a voice recorder, the processor 1202 may facilitate high-speed conversion of the voice signals into text content for local editing and review, and/or later download to a remote system, such as a computer word processor. Similarly, the converted voice signals may be used to control the device 1200 instead of using manual entry *via* the keypad.

Onboard peripheral devices, such as a printer 1230, signature and/or biometric input pad 1232, and a magnetic stripe reader 1234 can also be provided within the housing of the device 1200 or accommodated externally through one or more of the external port interfaces 1216. The device 1200 also includes an image capture system 1236 such that the user may take pictures and/or short movies for storage by the device 1200 and presentation by the display 1206. Additionally, a data form reading system 1238 is included for scanning data forms associated with articles of commerce. It is to be appreciated that these imaging systems (1236 and 1238) may be a single system capable of performing both functions.

FIG. 11 is a schematic block diagram of a sample-computing environment 1100 with which the present invention can interact. The system 1100 includes one or more client(s) 1110. The client(s) 1110 can be hardware and/or software (*e.g.,* threads, processes, computing devices). The system 1100 also includes one or more server(s) 1120. The server(s) 1120 can also be hardware and/or software (*e.g.,* threads, processes, computing devices). The servers 1120 can house threads to perform transformations by employing the present invention, for example.

One possible communication between a client 1110 and a server 1120 can be in the form of a data packet adapted to be transmitted between two or more computer processes. The system 1100 includes a communication framework 1140 that can be employed to facilitate communications between the client(s) 1110 and the server(s) 1120. The client(s) 1110 are operably connected to one or more client data store(s) 1150 that can be employed to store information local to the client(s) 1110. Similarly, the server(s) 1120 are operably connected to one or more server data store(s) 1130 that can be employed to store information local to the servers 1140.

With reference to FIG. 12, an exemplary environment 1210 for implementing various aspects of the invention includes a computer 1212. The computer 1212 includes a processing unit 1214, a system memory 1216, and a system bus 1218. The system bus 1218 couples system components including, but not limited to, the system memory 1216 to the processing unit 1214. The processing unit 1214 can be any of various available processors. Dual microprocessors and other multiprocessor architectures also can be employed as the processing unit 1214.

The system bus 1218 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1216 includes volatile memory 1220 and nonvolatile memory 1222. The basic input/output system (BIOS), containing the basic routines to transfer information between elements within the computer 1212, such as during start-up, is stored in nonvolatile memory 1222. By way of illustration, and not limitation, nonvolatile memory 1222 can include read only memory (ROM), programmable ROM (PROM), electrically programmable ROM (EPROM), electrically erasable ROM (EEPROM), or flash memory. Volatile memory 1220 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1212 also includes removable/non-removable, volatile/non-volatile computer storage media. Fig. 12 illustrates, for example a disk storage 1224. Disk storage 1224 includes, but is not limited to, devices like a magnetic disk drive, floppy disk drive, tape drive, Jaz drive, Zip drive, LS-100 drive, flash memory card, or memory stick. In addition, disk storage 1224 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1224 to the system bus 1218, a removable or non-removable interface is typically used such as interface 1226.

It is to be appreciated that Fig. 12 describes software that acts as an intermediary between users and the basic computer resources described in suitable operating environment 1210. Such software includes an operating system 1228. Operating system 1228, which can be stored on disk storage 1224, acts to control and allocate resources of the computer system 1212. System applications 1230 take advantage of the management of resources by operating system 1228 through program modules 1232 and program data 1234 stored either in system memory 1216 or on disk storage 1224. It is to be appreciated that the present invention can be implemented with various operating systems or combinations of operating systems.

A user enters commands or information into the computer 1212 through input device(s) 1236. Input devices 1236 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1214 through the system bus 1218 *via* interface port(s) 1238. Interface port(s) 1238 include, for example, a serial port, a parallel port, a game port, and a universal serial bus (USB). Output device(s) 1240 use some of the same type of ports as input device(s) 1236. Thus, for example, a USB port may be used to provide input to computer 1212, and to output information from computer 1212 to an output device 1240. Output adapter 1242 is provided to illustrate that there are some output devices 1240 like monitors, speakers, and printers, among other output devices 1240, which require special adapters. The output adapters 1242 include, by way of illustration and not limitation, video and sound cards that provide a means of connection between the output device 1240 and the system bus 1218. It should be noted that other devices and/or systems of devices provide both input and output capabilities such as remote computer(s) 1244.

Computer 1212 can operate in a networked environment using logical connections to one or more remote computers, such as remote computer(s) 1244. The remote computer(s) 1244 can be a personal computer, a server, a router, a network PC, a workstation, a microprocessor based appliance, a peer device or other common network node and the like, and typically includes many or all of the elements described relative to computer 1212. For purposes of brevity, only a memory storage device 1246 is illustrated with remote computer(s) 1244. Remote computer(s) 1244 is logically connected to computer 1212 through a network interface 1248 and then physically connected *via* communication connection 1250. Network interface 1248 encompasses communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1250 refers to the hardware/software employed to connect the network interface 1248 to the bus 1218. While communication connection 1250 is shown for illustrative clarity inside computer 1212, it can also be external to computer 1212. The hardware/software necessary for connection to the network interface 1248 includes, for exemplary purposes only, internal and external technologies such as, modems including regular telephone grade modems, cable modems and DSL modems, ISDN adapters, and Ethernet cards.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g.,* a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention.

In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A power management system for a wireless mobile terminal, comprising:
a configuration bank that stores power management schemes; and
a power management component that utilizes at least one power management scheme to selectively control power to one or more portions of the wireless mobile terminal.

2. The system of claim 1, the at least one power management scheme maintains power to a CPU and a network radio of the wireless mobile terminal to ensure reliable network communication while removing power from other portions of the wireless mobile terminal to reduce power consumption.

3. The system of claim 1, the power management component is activated to remove power *via* one of: a time lapse; a period of inactivity; an interrupt; an event; a user request; a programmatic application program interface (API); network data; an application, the wireless mobile terminal, and another wireless mobile terminal.

4. The system of claim 1, the power management component is activated to resume power *via* one of: pressing a button; turning a key; touching an active touch screen area; a programmatic control; voice; expiration of a timeout; a date; an electrical current; a request; a signal; motion; a trigger; a link status change; a network keep alive; a proxy-ARP packet; a re-authentication packet; a directed packet; wake-on-LAN request; and reception of network data.

5. The system of claim 4, the power management component executes as a background application.

6. The system of claim 1, the power management component automatically executes the power management scheme to reduce power consumption or waits for user confirmation.

7. The system of claim 1, the power management component executes in one of wireless mobile terminal BIOS, an application, an external device, and a wireless mobile terminal operating system.

8. The system of claim 1, the power management component utilizes one of intermittent and continuous polling of the wireless mobile terminal to automatically determine when power should be reduced and dynamically applies the power management scheme to reduce power.

9. The system of claim 1, the power management scheme is based on at least one of a wireless mobile terminal characteristic, a state of one or more portions of the wireless mobile terminal, a user identified configuration, and a user attribute.

10. The system of claim 1, the power management scheme extends battery life by reducing the power applied to the wireless mobile terminal.

11. The system of claim 1, the power management scheme is one of a default, a user defined, an application generated and an intelligence created configuration.

12. The system of claim 11, the intelligence created configuration is generated based on at least one of machine learning, a statistic, a probability, an inferences and/or a classifier.

13. The system of claim 1, further comprising an API that is utilized for at least one of invoking the power management component and providing a power management scheme.

14. A method that manages power for a portable terminal, comprising:
receiving indicia indicating power should be removed from a portion of the portable terminal;
removing power from the portion of the portable terminal to reduce battery power consumption; and
maintaining portable terminal network connectivity.

15. The method of claim 14 further comprising obtaining a power management configuration that defines a power removal scheme.

16. The method of claim 14, further comprising sustaining power to a CPU and a network radio of the portable terminal to ensure reliable network communication.

17. The method of claim 14, further comprising activating a power management utility *via* one of: a time lapse; a period of inactivity; an interrupt; an event; a user request; a programmatic application program interface (API); network data; an application, the wireless mobile terminal, another wireless mobile terminal; pressing a button; turning a key; touching an active touch screen area; a programmatic control; voice; expiration of a timeout; a date; an electrical current; a request; a signal; motion; and network data, the power management utility removes the power from the portion of the portable terminal.

18. The method of claim 14, further comprising returning power to the portion of the portable terminal upon receiving a signal from a wake event comprising one of a link status change, a network keep alive, a proxy-ARP packet, and a re-authentication packet.

19. A power management method that facilitate distribution of power to portions of a wireless computing device, comprising:
detecting that power should be removed from at least a portion of the wireless computing device;
retrieving an associated power management scheme; and
employing the power management scheme to remove power from the portion of the wireless computing device while sustaining power to the wireless computing device's CPU and network radio.

20. The method of claim 19, further comprising employing one of intermittent and continuous polling of the wireless computing device to automatically detect when power should be reduced.

21. The method of claim 19, further comprising dynamically adjusting the power applied to the at least one portion of the wireless computing device.

22. The method of claim 19, further comprising drawing less power from a battery utilized to power the wireless computing device.

23. The method of claim 19, the power management scheme is one of a default, a user defined, an application generated and/or an intelligence created configuration.

24. The method of claim 19, further comprising employing intelligence to facilitate managing the power applied to the at least one portion of the wireless computing device.

25. The method of claim 24, the intelligence is based on at least one of machine learning, a statistic, a probability, an inferences and/or a classifier.

26. A system that facilitates terminal power management, comprising:
means for determining when to activate power management;
means for acquiring a selective power management configuration; and
means for applying the power management configuration to selectively lower power applied to portions of the terminal to mitigate power consumption while maintain desired functionality.
